# EUROPEAN PATENT APPLICATION

(11) **EP 4 737 223 A1**
(43) Date of publication of application: **06.05.2026**
(21) Application number: 24209523.0
(22) Date of filing: 29.10.2024
(51) Int. Cl.: B60R 21/01, B60R 21/0134, B60R 22/20

(54) **SEATBELT SYSTEM FOR A VEHICLE, SEATBELT REDIRECTION UNIT, VEHICLE, AND METHOD FOR OPERATING A SEATBELT SYSTEM**

(71) Applicant: Volvo Car Corporation, 405 31 Göteborg (SE)
(72) Inventor: ÖSTH, Jonas, 40531 Göteborg (SE); BOHMAN, Katarina, 40531 Göteborg (SE); HEURLIN, Fredrik, 40531 Göteborg (SE); ADOLFSSON, Peter, 40531 Göteborg (SE); SETTERBERG, Peter, 40531 Göteborg (SE); ROSENBERG, Johan, 40531 Göteborg (SE); PETTERSSON, Jeanette, 40531 Göteborg (SE); BJÖRKLUND, Magnus, 40531 Göteborg (SE)
(74) Representative: Kransell & Wennborg KB

(57) **Abstract**

The disclosure relates to a seatbelt system (26) for a vehicle (10). The seatbelt system (26) comprises a seatbelt (28), a seatbelt anchoring unit connected to the seatbelt (28) and attachable to a body (36) of the vehicle (10), a first seatbelt redirection unit (42) coupled to the seatbelt (28) and attachable to the body (36) of the vehicle (10) at a distance from the anchoring unit, a seatbelt retracting unit configured to retract and/or tension the seatbelt, and a second seatbelt redirection unit (54) comprising a deflecting part (56) and a release mechanism (86). The deflecting part (56) is coupled to the seatbelt (28), and configured for deflecting a portion of the seatbelt (28) spanning between an occupant (20) of the vehicle (10) using the seatbelt (28) and the first seatbelt redirection unit (42). The release mechanism (86) is configured for selectively uncoupling the seatbelt (28) from the deflecting part (56) in the event of a crash or in preparation for an imminent crash. Moreover, the disclosure relates to a seatbelt redirection unit (54) and to a vehicle (10) comprising the seatbelt system (26) or the seatbelt redirection unit (54). Furthermore, the disclosure is directed to a method for operating the seatbelt system (26).

## Description

### TECHNICAL FIELD

The present disclosure relates to a seatbelt system for a vehicle.

The present disclosure also relates to a seatbelt redirection unit for a seatbelt system of a vehicle.

Moreover, the present disclosure is directed to a vehicle comprising a seatbelt system or a seatbelt redirection unit.

Furthermore, the present disclosure relates to a method for operating a seatbelt system.

### BACKGROUND ART

In vehicles, particularly in automobile vehicles, seatbelt systems are safety features. At the same time, efforts are made to make the use of a seatbelt system comfortable.

In this context, it is known to use movable seatbelt redirection units that are mounted on a body of the vehicle in which the seatbelt system is used, e.g. on a B pillar. Using such a movable seatbelt redirection unit ensures a high level of safety, since the seatbelt may be correctly arranged on a vehicle user. At the same time, a movable seatbelt redirection unit enhances user comfort.

### SUMMARY

It is an objective of the present disclosure to provide an improved seatbelt system for a vehicle that offers an increased level of safety and comfort.

The problem is at least partially solved or alleviated by the subject matter of the independent claims of the present disclosure, wherein further examples are incorporated in the dependent claims.

According to a first aspect, there is provided a seatbelt system for a vehicle. The seatbelt system comprises a seatbelt. Moreover, the seatbelt system comprises a seatbelt anchoring unit connected to the seatbelt and attachable to a body of the vehicle. The seatbelt system additionally comprises a first seatbelt redirection unit coupled to the seatbelt and attachable to the body of the vehicle at a distance from the anchoring unit. Furthermore, the seatbelt system comprises a seatbelt retracting unit configured to retract and/or tension the seatbelt. Moreover, and the seatbelt system comprises a second seatbelt redirection unit comprising a deflecting part and a release mechanism. The deflecting part is coupled to the seatbelt, and configured for deflecting a portion of the seatbelt spanning between an occupant of the vehicle using the seatbelt and the first seatbelt redirection unit. The release mechanism is configured for selectively uncoupling the seatbelt from the deflecting part in the event of a crash or in preparation for an imminent crash.

If the seatbelt system is mounted in a vehicle, the seatbelt may restrain an occupant occupying a seat of a seat assembly associated with the seatbelt system in the event of a crash or in preparation for an imminent crash of the vehicle. In the latter case, the seatbelt may even actively provide a restraining force acting on the occupant. In order to mechanically support the restraining force, the seatbelt is anchored via the seatbelt anchoring unit attachable to the body of the vehicle. The vehicle may comprise an attachment interface for the seatbelt anchoring unit at a floor of a passenger cabin of the vehicle or at any other suitable location, e.g. a pillar of the vehicle body. The seatbelt retracting unit is configured to retract the seatbelt if an occupant of the vehicle is not using the seatbelt. Also, the seatbelt retracting unit is configured to tense the seatbelt if an occupant of the vehicle is using the seatbelt. This prevents that the seatbelt is only loosely guided around an upper body of the occupant. In other words, slack is removed by the seatbelt retracting unit. The seatbelt retracting unit may be integrally formed with the seatbelt anchoring unit. The seatbelt retracting unit may comprise a reel for retracting, i.e. rolling up, the seatbelt. Coming from the seatbelt anchoring unit, the seatbelt may be deflected at the first seatbelt redirection unit in order that the seatbelt spans from the first seatbelt redirection unit towards a buckle that is affixed to the associated seat assembly or the vehicle body near a hip of the occupant if the occupant is using the seatbelt. The vehicle may comprise an attachment interface for the first seatbelt redirection unit on a body of the vehicle. This attachment interface may be located substantially at a height of a head of the occupant if the occupant is sitting in the seat of the associated seat assembly. Thus, the seatbelt anchoring unit and the first seatbelt retracting unit are arranged at a distance from each other. The first seatbelt redirection unit being coupled to the seatbelt is to be understood in that it interacts with the seatbelt as a deflection element. Thus, the seatbelt changes its orientation and/or its direction at the first seatbelt redirection unit without being fixed or locked at the first seatbelt redirection unit. If the occupant is using the seatbelt, the second seatbelt redirection unit is located between the first seatbelt redirection unit and the buckle of the associated seat assembly. The second seatbelt redirection unit ensures that the seatbelt is guided even more closely around the upper body of the occupant. In particular, the second seatbelt redirection unit may ensure a close guidance of the seatbelt around a shoulder region or in the vicinity of a shoulder region of the occupant. Thus, due to the fact that the seatbelt is guided closely on the occupant, a space in front of the occupant is kept free from the seatbelt such that a range of motion, e.g. for hands and arms of the occupant, is not restricted by the seatbelt. Moreover, the seatbelt does not visually hinder the occupant. This enhances both safety and comfort for the occupant. For this purpose, the second seatbelt redirection unit is arranged closer to the upper body of the occupant than the first seatbelt redirection unit if the occupant is using the seatbelt. The deflecting part of the second seatbelt redirection unit being coupled to the seatbelt, again, is to be understood in that the deflecting part interacts with the seatbelt as a deflection element. Thus, the seatbelt changes its orientation and/or its direction at the deflecting part without being fixed or locked at the deflecting part. The release mechanism of the second seatbelt redirection unit is configured for selectively uncoupling the seatbelt from the deflecting part. This is understood in that the release mechanism is configured to purposefully uncouple the seatbelt from the deflecting part of the second seatbelt redirection unit. In other words, the seatbelt is not deflected at the deflecting part of the second seatbelt redirection unit anymore if the release mechanism has uncoupled the seatbelt from the deflecting part. In this case, the seatbelt spans between the first seatbelt redirection unit and the occupant if the occupant is using the seatbelt. The release mechanism is configured for selectively uncoupling the deflecting part from the seatbelt in the event of a crash or in preparation for an imminent crash. This means that the release mechanism may uncouple the seatbelt from the deflecting part if the vehicle is already involved in a crash or if the vehicle is about to be involved in a crash within a predefined time period, e.g. a tenth of a second or preferably half a second or even more preferably one second before an expected crash. It has been observed that a full capability of the seatbelt in restraining the occupant in the event of a crash is provided if the seatbelt spans between the first seatbelt redirection unit and the occupant. Thus, the second seatbelt redirection unit provides comfort to the occupant due to a close guidance of the seatbelt along the upper body of the occupant if the occupant is using the seatbelt and if the vehicle is not involved in a crash or in an imminent crash. If the vehicle is involved in a crash or in an imminent crash, the release mechanism of the second seatbelt redirection unit provides a full capability of the seatbelt in restraining the occupant. In this context, the seatbelt may be located at a position above, i.e. elevated over, the upper body of the occupant, at least at the beginning of the crash or in preparation for the imminent crash. Moreover, the full capability of the seatbelt in restraining the occupant in the event of a crash is provided since the restraining force can be supported by mechanically strong attachment interfaces of the seatbelt anchoring unit, the first seatbelt redirection unit and the buckle affixed to the associated seat assembly. In other words, an effectiveness of the seatbelt is enhanced. This enhances safety for the user of the seatbelt.

In an example, the deflecting part comprises a connection interface for connecting the deflecting part to a backrest of a seat of the vehicle. Alternatively, the deflecting part comprises a connection interface for connecting the deflecting part to the body of the vehicle. In the former alternative, the connection interface of the deflecting part may particularly be a fixed connection interface. This means that the position of the deflecting part relative to the backrest of the seat of the vehicle is fixed, i.e. the deflecting part may not move relative to the backrest of the seat. Thus, if the backrest of the seat is moved between an upright position and a reclined position, the deflecting part with its connection interface to the backrest follows the movement of the backrest. In the latter alternative, the connection interface of the deflecting part may be a fixed connection interface or a movable connection interface. This means that the position of the deflecting part relative to the body of the vehicle may be fix or may be variable. In any case of the latter alternative, the relative position between the position of the deflecting part relative to the backrest of the seat varies as the backrest of the seat is moved between an upright position and a reclined position. In all of the afore-mentioned alternatives, the connection interface of the deflecting part allows to mount the deflecting part at a location that is convenient for redirecting the seatbelt such that the seatbelt can be provided closely on an upper body of the associated vehicle user.

In an example, the release mechanism comprises a magnetic actuator, a pyrotechnic actuator, an inertia-activated actuator and/or a predefined breaking point configured to break in the event of a crash or in preparation for an imminent crash. The magnetic actuator may comprise an electric coil that, when being exposed to an electric current, produces a magnetic field. The magnetic field may act on an actuation element configured to selectively uncouple the seatbelt from the deflecting part, e.g. by retracting the deflecting part or by inactivating the deflecting part. In another example, the deflecting part may be uncoupled from the remaining parts of the second seatbelt redirection unit by deactivating a magnetic actuator, in other words by inactivating the magnetic actuator, hence, turning off the electric current fed through the electric coil, such that the deflecting part acts with no or insignificant magnetic force on the remaining parts of the second seatbelt redirection unit. This uncouples the seatbelt from the remaining second seatbelt redirection unit. In this context, the magnetic actuator, the pyrotechnic actuator, and the inertia-activated actuator may be designated as active actuators. The predefined breaking point may be considered to be a passive actuator.

In case the release mechanism comprises a pyrotechnic actuator, the pyrotechnic actuator may additionally or alternatively be used to uncouple the deflecting part from the seatbelt. The pyrotechnic actuator may comprise an explosive material that greatly expands its volume upon ignition. Additionally or alternatively, the pyrotechnic actuator may comprise a reservoir of pressurized gas that can be released upon receipt of a corresponding signal indicative of a crash or an imminent crash of the vehicle. In another example, the pyrotechnic actuator may cause a mechanical connection between the deflecting part and the rest of the second seatbelt redirection unit to break. According to examples of the present disclosure, the pyrotechnic actuator may utilize the same pyrotechnic actuator as the seatbelt tensioner, hence, rely on the same pyrotechnic charge as used for providing pre-tensioning of the seatbelt in the event of a crash. The skilled person will recognize that the pyrotechnic actuator should be configured such that the occupant is in no way affected, hence, harmed, upon activation.

In case the release mechanism comprises an inertia-activated actuator for selectively uncoupling the seatbelt from the deflecting part, the inertia-activated mechanical actuator may for example comprise a pendulum-latch arrangement. The pendulum-latch arrangement may be configured such that when a pendulum moves forward by a certain distance/to a certain angle due to being exposed to an inertia force, e.g. resulting from an emergency braking maneuver or a crash of the vehicle, an interconnected locking latch is retracted. This may in turn cause a coupling pin between the deflecting part and the rest of the second seatbelt redirection unit to be released. Releasing the coupling pin causes the deflecting part to be released.

In embodiments in which the mechanical connection between the deflecting part and the rest of the second seatbelt redirection unit may break at a predefined breaking point, the predefined breaking point may be a weak spot in the mechanical structure of the deflecting part itself or in the mechanical connection between the deflecting part and the remaining parts of the second seatbelt redirection unit. The predefined breaking point may be configured to break at reduced loads compared to the remaining mechanical structure of the deflecting part or the mechanical connection between the deflecting part and the rest of the second seatbelt redirection unit. Additionally, the predefined breaking point may be broken at a predetermined and, thus, at an expected level of force. Moreover, breaking the deflecting part or the mechanical connection between the deflecting part and the remaining parts of the second seatbelt redirection unit at a location of the predefined breaking point may allow debris that is created due to the breakage to leave the breaking zone in a reliable manner. This way, it is avoided that debris created due to the breakage blocks the uncoupling of the seatbelt from the deflecting part. According to an example, the predefined breaking point may be broken by a pyrotechnic actuator provided for that particular purpose or provided for pre-tensioning of the seatbelt, or by other external forces. The other external forces may particularly encompass a tension within the seatbelt that builds up prior to or during the crash. Using a magnetic actuator, a pyrotechnic actuator, an inertia-activated actuator and/or a predefined breaking point are all reliable and quick measures for uncoupling the deflecting part from the second seatbelt redirection unit in the event of a crash or in preparation for an imminent crash.

In an example, the seatbelt system further comprises a seatbelt tensioner. The seatbelt tensioner forms part of the release mechanism. The seatbelt tensioner may be part of the retracting unit. Moreover, the seatbelt tensioner may comprise, for example, a pyrotechnic actuator. Additionally or alternatively, the seatbelt tensioner may comprise an electric motor. In both alternatives, the, for example, pyrotechnic actuator and/or the electric motor is configured to create a strong tensile force that tenses the seatbelt in the event of a crash or in preparation for an imminent crash. The tensile force in the seatbelt built up by the seatbelt tensioner may uncouple the seatbelt from the deflecting part of the second seatbelt redirection unit. In an example, the tensile force generated by the seatbelt tensioner may break the coupling between the deflecting part and the seatbelt. In another example, the tensile force generated by the seatbelt tensioner may break the mechanical connection between the deflecting part and the rest of the second seatbelt redirection unit. In particular, the mechanical connection to be broken may involve the predefined breaking point of the release mechanism. Breaking the deflecting part and/or a mechanical connection between the deflecting part and the remaining parts of the second seatbelt redirection unit by the seatbelt tensioner in the event of a crash or in preparation of an imminent crash allows uncoupling the seatbelt from the deflecting part in a reliable and quick manner.

In an example, the seatbelt system further comprises a positioning mechanism coupled to the deflecting part such that a position of the deflecting part can be adjusted along a height direction of the vehicle. This example is particularly applicable if the deflecting part comprises a movable connection interface for connecting the deflecting part to the body of the vehicle. The positioning mechanism may comprise a guiding means for guiding a movement of the deflecting part relative to the vehicle body along the height direction of the vehicle. The height direction is to be understood as a direction perpendicular to a plane or a surface on which the vehicle is able to drive. Thus, the deflecting part may be movable between an upper position and a lower position with respect to a height direction of the vehicle. It is to be noted that the term "movable" may comprise a manual movement of the deflecting part, a semi-automatic movement of the deflecting part and/or an automatic movement of the deflecting part. If the backrest of the seat is moved to an upright position, the deflecting part can be moved to the upper position by means of the positioning mechanism. If the backrest of the seat is moved to a reclined position, the deflecting part can be moved to the lower position by means of the positioning mechanism. This ensures that the seatbelt is guided closely adjacent to the upper body of the occupant occupying the seat whose backrest is in the reclined position.

In an example, the positioning mechanism provides a range of adjustment of 300 mm to 500 mm. Given a difference in orientation of the backrest of the seat in the upright position and in the reclined position of common seats, it has been observed that a range of adjustment of 300 mm to 500 mm along the height direction of the vehicle is necessary to ensure that the seatbelt is closely guided adjacent to the upper body of the occupant in any position of the backrest of the seat that the occupant is sitting on.

In an example, the positioning mechanism comprises a drive unit for moving the deflecting part. The drive unit may enable the semi-automatic movement and/or the automatic movement of the deflecting part. Thus, manual effort for the occupant to move the deflecting part is reduced or even eliminated. In an example, the drive unit may comprise an electric motor. An electric motor is an efficient way of driving the drive means in a manner controllable by the occupant. Thus, the deflecting part can be moved along the guiding means between the upper position and the lower position by powering the electric motor.

In an example, the drive unit comprises a gear drive, a spindle drive and/or a belt drive. The gear drive, the spindle drive and/or the belt drive may be coupled to the deflecting part. Thus, a movement of the gear drive, the spindle drive and/or the belt drive may cause a movement of the deflecting part along the height direction of the vehicle. The gear drive, the spindle drive and/or the belt drive may further be coupled to the electric motor. In this configuration, the gear drive, the spindle drive and/or the belt drive serve as means for converting a rotational movement of the electric motor into a translatory movement of the deflecting means along the height direction of the vehicle.

In an example, the drive unit comprises a communication interface connectable to a control unit of the seat of the vehicle such that the deflecting part is positionable based on a position and/or a movement of the seat. In particular, the deflecting part may be automatically moved to the lower position if the backrest of the seat of the seat assembly is in a reclined position. Thus, the seatbelt system provides enhanced comfort to the occupant of the vehicle since the seatbelt can be moved out of the view of the occupant if the backrest of the seat occupied by the occupant is in a reclined position. Additionally, a space in front of the occupant is kept free from the seatbelt such that a range of motion, e.g. for hands and arms of the occupant, is not restricted by the seatbelt. Moreover, the deflecting part may be automatically moved to the upper position particularly if the backrest of the seat of the seat assembly is in an upright position. This also provides comfort to the occupant of the vehicle since a position of the seatbelt is adjusted such that it is closely guided around a shoulder region or in the vicinity of a shoulder region of the occupant. Additionally, safety is kept on a high level.

According to a second aspect, there is provided a seatbelt redirection unit for a seatbelt system of a vehicle. The seatbelt redirection unit comprises a deflecting part couplable to a seatbelt and configured for deflecting a portion of the seatbelt spanning between an occupant of the vehicle using the seatbelt and another seatbelt redirection unit. The seatbelt redirection unit further comprises a release mechanism for selectively uncoupling the seatbelt from the deflecting part in the event of a crash or in preparation for an imminent crash.

The seatbelt redirection unit is, for example, a second seatbelt redirection unit as introduced in connection with the seatbelt system according to the first aspect. The other seatbelt redirection unit is, for example, a first seatbelt redirection unit as also introduced in connection with the seatbelt system according to the first aspect. The seatbelt system of the vehicle is, for example, a seatbelt system according to the first aspect. If the occupant is using a seatbelt of the seatbelt system, the seatbelt redirection unit according to the second aspect is located between a first seatbelt redirection unit of the seatbelt system and a buckle of an associated seat assembly. The seatbelt redirection unit according to the second aspect ensures that the seatbelt is guided even more closely on the upper body of the occupant than when only the first seatbelt redirection unit would be in place. In particular, the seatbelt redirection unit according to the second aspect may ensure a close guidance of the seatbelt in a shoulder region or in the vicinity of a shoulder region of the occupant. Thus, due to the fact that the seatbelt is guided closely on the occupant, a space in front of the occupant is kept free from the seatbelt such that a range of motion, e.g. for hands and arms of the occupant, is not restricted by the seatbelt. Moreover, the seatbelt does not visually hinder the occupant. This enhances comfort and safety for the occupant. The seatbelt redirection unit according to the second aspect is arrangeable closer to the upper body of the occupant than the first seatbelt redirection unit if the occupant is using the seatbelt. The deflecting part of the seatbelt redirection unit according to the second aspect being coupled to the seatbelt is to be understood in that the deflecting part interacts with the seatbelt as a deflection element. Thus, the seatbelt changes its orientation and/or its direction at the deflecting part without being fixed or locked at the deflecting part. The release mechanism of the seatbelt redirection unit according to the second aspect is configured for selectively uncoupling the seatbelt from the deflecting part. This is understood in that the release mechanism is configured to purposefully uncouple the seatbelt from the deflecting part. In other words, the seatbelt is not deflected at the deflecting part of the seatbelt redirection unit according to the second aspect anymore if the release mechanism has uncoupled the seatbelt from the deflecting part. In this case, the seatbelt spans between the first seatbelt redirection unit and the occupant if the occupant is using the seatbelt. The release mechanism is configured for selectively uncoupling the deflecting part from the seatbelt in the event of a crash or in preparation for an imminent crash. This means that the release mechanism may uncouple the seatbelt from the deflecting part if the vehicle is already involved in a crash or if the vehicle is about to be involved in a crash within a predefined time period, e.g. a tenth of a second or preferably half a second or even more preferably one second before an expected crash. It has been observed that a full capability of the seatbelt in restraining the occupant in the event of a crash is provided if the seatbelt spans between the first seatbelt redirection unit and the occupant. Thus, the seatbelt redirection unit according to the second aspect provides comfort to the occupant due to a close guidance of the seatbelt along the upper body of the occupant if the occupant is using the seatbelt and if the vehicle is not involved in a crash or in an imminent crash. If the vehicle is involved in a crash or in an imminent crash, the release mechanism of the seatbelt redirection unit according to the second aspect provides a full capability of the seatbelt in restraining the occupant. In this context, the seatbelt may be located at a position above, i.e. elevated over, the upper body of the occupant, at least at the beginning of the crash or in preparation for the imminent crash. In other words, an effectiveness of the seatbelt is enhanced. This enhances safety for the user of the seatbelt.

In an example, the release mechanism comprises a magnetic actuator, a pyrotechnic actuator, an inertia-activated actuator and/or a predefined breaking point configured to break in the event of a crash or in preparation for an imminent crash. The magnetic actuator may comprise an electric coil that, when being exposed to an electric current, produces a magnetic field. The magnetic field may act on an actuation element configured to selectively uncouple the seatbelt from the deflecting part, e.g. by retracting the deflecting part or by inactivating the deflecting part. In another example, the deflecting part may be uncoupled from the remaining parts of the seatbelt redirection unit according to the second aspect by deactivating the magnetic actuator, in other words by inactivating the magnetic actuator, hence, turning off the electric current fed through the electric coil, such that the deflecting part acts with no or insignificant magnetic force on the remaining parts of the seatbelt redirection unit according to the second aspect. This uncouples the seatbelt from the remaining seatbelt redirection unit according to the second aspect. In this context, the magnetic actuator, the pyrotechnic actuator, and the inertia-activated actuator may be designated as active actuators. The predefined breaking point may be considered to be a passive actuator.

In case the release mechanism comprises a pyrotechnic actuator, the pyrotechnic actuator may additionally or alternatively be used to uncouple the deflecting part from the seatbelt. The pyrotechnic actuator may comprise an explosive material that greatly expands its volume upon ignition. Additionally or alternatively, the pyrotechnic actuator may comprise a reservoir of pressurized gas that can be released upon receipt of a corresponding signal indicative of a crash or an imminent crash of the vehicle. In another example, the pyrotechnic actuator may cause a mechanical connection between the deflecting part and the rest of the seatbelt redirection unit according to the second aspect to break. According to examples of the present disclosure, the pyrotechnic actuator may utilize the same pyrotechnic actuator as the seatbelt tensioner, hence, rely on the same pyrotechnic charge as used for providing pre-tensioning of the seatbelt in the event of a crash. The skilled person will recognize that the pyrotechnic actuator should be configured such that the occupant is in no way affected, hence, harmed, upon activation.

In case the release mechanism comprises an inertia-activated actuator for selectively uncoupling the seatbelt from the deflecting part, the inertia-activated mechanical actuator may for example comprise a pendulum-latch arrangement. The pendulum-latch arrangement may be configured such that when a pendulum moves forward by a certain distance/to a certain angle due to being exposed to an inertia force, e.g. resulting from an emergency braking maneuver or a crash of the vehicle, an interconnected locking latch is retracted. This may in turn cause a coupling pin between the deflecting part and the rest of the second seatbelt redirection unit according to the second aspect to be released. Releasing the coupling pin causes the deflecting part to be released.

In embodiments in which the mechanical connection between the deflecting part and the rest of the seatbelt redirection unit according to the second aspect may break at a predefined breaking point, the predefined breaking point may be a weak spot in the mechanical structure of the deflecting part itself or in the mechanical connection between the deflecting part and the remaining parts of the seatbelt redirection unit according to the second aspect. The predefined breaking point may be configured to break at reduced loads compared to the remaining mechanical structure of the deflecting part or the mechanical bond between the deflecting part and the rest of the seatbelt redirection unit according to the second aspect. Additionally, the predefined breaking point may be broken at a predetermined and, thus, at an expected level of force. Moreover, breaking the deflecting part or the mechanical bond between the deflecting part and the rest of the seatbelt redirection unit according to the second aspect at a location of the predefined breaking point may allow debris that is created due to the breakage to leave the breaking zone in a reliable manner. This way, it is avoided that debris created due to the breakage blocks the uncoupling of the seatbelt from the deflecting part. According to an example, the predefined breaking point may be broken by a pyrotechnic actuator provided for that particular purpose or provided for pre-tensioning of the seatbelt, or by other external forces. The other external forces may particularly encompass a tension within the seatbelt that builds up prior to or during the crash. Using a magnetic actuator, a pyrotechnic actuator, an inertia-activated actuator and/or a predefined breaking point are all reliable and quick measures for uncoupling the deflecting part from the seatbelt redirection unit according to the second aspect in the event of a crash or in preparation for an imminent crash.

In an example, the release mechanism comprises a seatbelt tensioner. In other words, the seatbelt tensioner forms part of the release mechanism. The seatbelt tensioner may be part of the retracting unit. Moreover, the seatbelt tensioner may comprise, for example, a pyrotechnic actuator. Additionally or alternatively, the seatbelt tensioner may comprise an electric motor. In both alternatives, the, for example, pyrotechnic actuator and/or the electric motor is configured to create a strong tensile force that tenses the seatbelt in the event of a crash or in preparation for an imminent crash. The tensile force in the seatbelt built up by the seatbelt tensioner may uncouple the seatbelt from the deflecting part of the seatbelt redirection unit according to the second aspect. In an example, the tensile force generated by the seatbelt tensioner may break the coupling between the deflecting part and the seatbelt. In another example, the tensile force generated by the seatbelt tensioner may break the mechanical connection between the deflecting part and the remaining parts of the seatbelt redirection unit according to the second aspect. In particular, the mechanical connection to be broken may involve the predefined breaking point of the release mechanism. Breaking the deflecting part and/or a mechanical connection between the deflecting part and the remaining parts of the seatbelt redirection unit according to the second aspect by the seatbelt tensioner in the event of a crash or in preparation of an imminent crash allows uncoupling the seatbelt from the deflecting part in a reliable and quick manner.

According to a third aspect, there is provided a vehicle comprising a seatbelt system according to the first aspect or a seatbelt redirection unit according to the second aspect. The seatbelt system or the seatbelt redirection unit is associated with a seat of the vehicle. The second seatbelt redirection unit of the seatbelt system according to the first aspect or the seatbelt redirection unit according to the second aspect ensures that the seatbelt is guided closely adjacent to the upper body of the occupant if the occupant is using the seatbelt and occupying the seat of the associated seat assembly. In particular, the second seatbelt redirection unit of the seatbelt system according to the first aspect or the seatbelt redirection unit according to the second aspect may ensure a close guidance of the seatbelt around a shoulder region or in the vicinity of a shoulder region of the occupant. Thus, due to the fact that the seatbelt is guided closely on the occupant, a space in front of the occupant is kept free from the seatbelt such that a range of motion, e.g. for hands and arms of the occupant, is not restricted by the seatbelt. Moreover, the seatbelt does not visually hinder the occupant. This enhances comfort and safety for the occupant. This is due to the fact, that the second seatbelt redirection unit of the seatbelt system according to the first aspect or the seatbelt redirection unit according to the second aspect is arranged closer to the upper body of the occupant than a first seatbelt redirection unit of the seatbelt system according to the first aspect if the occupant is using the seatbelt. The second seatbelt redirection unit of the seatbelt system according to the first aspect or the seatbelt redirection unit according to the second aspect comprises a deflecting part and a release mechanism as has been explained in connection with the first aspect and the second aspect. Thus, providing such a vehicle provides comfort and safety to the occupant due to a close guidance of the seatbelt adjacent to the upper body of the occupant if the occupant is using the seatbelt and if the vehicle is not involved in a crash or in an imminent crash. If the vehicle is involved in a crash or in an imminent crash, the release mechanism of the second seatbelt redirection unit provides a full capability of the seatbelt in restraining the occupant. In this context, the seatbelt may be located at a position above, i.e. elevated over, the upper body of the occupant, at least at the beginning of the crash or in preparation for the imminent crash. In other words, an effectiveness of the seatbelt is enhanced. This enhances safety for the occupant.

In an example, the deflecting part is mounted on a backrest of the seat or on a body of the vehicle. In the former alternative, the position of the deflecting part relative to the backrest of the seat of the vehicle remains the same, if the backrest of the seat is moved between an upright position and a reclined position. Thus, the deflecting part follows the movement of the backrest. In the latter alternative, the deflecting part may be a fixedly or movably mounted to the body of the vehicle. This means that the position of the deflecting part relative to the body of the vehicle may remain the same or may be variable. In any case of the latter alternative, the relative position between the position of the deflecting part relative to the backrest of the seat varies as the backrest of the seat is moved between an upright position and a reclined position. In all of the afore-mentioned alternatives, the deflecting part is mounted at a location that is convenient for redirecting the seatbelt such that the seatbelt can be provided closely on an upper body of the associated vehicle user.

According to a fourth aspect, there is provided a method for operating a seatbelt system of the first aspect. The seatbelt is redirected at a first position using a first seatbelt redirection unit, and at a second position using a second seatbelt redirection unit. The second seatbelt redirection unit comprises a deflecting part and a release mechanism. The method comprises using the release mechanism for uncoupling the seatbelt from the deflecting part of the second seatbelt redirection unit in the event of a crash or an imminent crash. The effect of redirecting the seatbelt twice is that the shoulder harness can be kept in close proximity of the upper body of the occupant if the occupant is using the seatbelt and occupying the seat. Thus, due to the fact that the seatbelt is guided closely on the occupant, a space in front of the occupant is kept free from the seatbelt such that a range of motion, e.g. for hands and arms of the occupant, is not restricted by the seatbelt. Moreover, the seatbelt does not visually hinder the occupant. This enhances comfort and safety for the occupant if the vehicle is not involved in a crash or in an imminent crash. The release mechanism selectively uncouples the seatbelt from the deflecting part. This means that the release mechanism may purposefully uncouple the seatbelt from the deflecting part. In other words, the seatbelt is not deflected at the deflecting part of the second seatbelt redirection unit anymore if the release mechanism has uncoupled the seatbelt from the deflecting part. In this case, the seatbelt spans between the first seatbelt redirection unit and the occupant if the occupant is using the seatbelt. It has been observed that a full capability of the seatbelt in restraining the occupant in the event of a crash is provided if the seatbelt spans between the first seatbelt redirection unit and the occupant. Thus, the present method provides comfort to the occupant due to a close guidance of the seatbelt along the upper body of the occupant if the occupant is using the seatbelt and if the vehicle is not involved in a crash or in an imminent crash. If the vehicle is involved in a crash or in an imminent crash, the release mechanism of the second seatbelt redirection unit provides a full capability of the seatbelt in restraining the occupant. In this context, the seatbelt may be located at a position above, i.e. elevated over, the upper body of the occupant, at least at the beginning of the crash or in preparation for the imminent crash. In other words, an effectiveness of the seatbelt is enhanced. This enhances safety for the occupant.

In an example, redirecting the seatbelt at a second position using a second seatbelt redirection unit is based on a position and/or a movement of the seat. In particular, the deflecting part may be moved to an upper position with respect to the height direction of the vehicle if the backrest of the associated seat assembly is in an upright position. This provides comfort to the occupant of the vehicle since the position of the seatbelt associated with the guiding assembly is adjusted such that it is closely guided along a shoulder region and thus over an entire length of the upper body of the occupant. The deflecting part may be moved to a lower position with respect to the height direction of the vehicle if the backrest of the associated seat assembly is in a reclined position. Thus, the vehicle provides enhanced comfort to the occupant of the vehicle since a seatbelt associated with the guiding assembly can be moved out of the view of the occupant of the vehicle if the backrest of the seat occupied by the occupant is in a reclined position. Additionally, a space in front of the occupant is kept free from the seatbelt such that a range of motion, e.g. for hands and arms of the occupant, is not restricted by the seatbelt.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a side view of a vehicle according to the present disclosure comprising a seatbelt system according to the present disclosure and an associated seat assembly, wherein a backrest of a seat of the seat assembly is in an upright position and a seatbelt redirection unit according to the present disclosure is in an upper position,
- Figure 2: shows a side view of the vehicle of Figure 1, wherein the backrest of the seat of the seat assembly is in a reclined position and the seatbelt redirection unit according to the present disclosure is in a lower position,
- Figure 3: shows an isolated side view of the seat assembly of Figure 2, wherein the backrest of the seat of the seat assembly is in the reclined position and the seatbelt redirection unit according to the present disclosure is in the lower position but uncoupled from the seatbelt,
- Figure 4: shows an isolated front view of the seat assembly of Figure 1, wherein the backrest of the seat of the seat assembly is in the upright position and the seatbelt redirection unit according to the present disclosure is in the upper position,
- Figure 5: shows an isolated front view of the seat assembly of Figure 4, wherein the backrest of the seat of the seat assembly is in the reclined position and the seatbelt redirection unit according to the present disclosure is in the upper position,
- Figure 6: shows an isolated front view of the seat assembly of Figure 2, wherein the backrest of the seat of the seat assembly is in the reclined position and the seatbelt redirection unit according to the present disclosure is in the lower position,
- Figure 7: shows an isolated front view of the seat assembly of Figure 3, wherein the backrest of the seat of the seat assembly is in the reclined position and the seatbelt redirection unit according to the present disclosure is in the lower position but uncoupled from the seatbelt,
- Figure 8: shows an example of a positioning mechanism of the seatbelt system according to the present disclosure comprising a drive unit, wherein the drive unit comprises a threaded spindle,
- Figure 9: shows the positioning mechanism of Figure 8 viewed in a direction I,
- Figure 10: shows a cross sectional view of the seatbelt redirection unit according to the present disclosure along sectional line A-A in Figure 8, wherein a release mechanism comprises a pyrotechnic actuator,
- Figure 11: shows a cross sectional view of the seatbelt redirection unit according to the present disclosure along sectional line A-A in Figure 8, wherein the release mechanism comprises a magnetic actuator,
- Figure 12: shows a cross sectional view of the seatbelt redirection unit according to the present disclosure along sectional line A-A in Figure 8, wherein the release mechanism comprises a predefined breaking point,
- Figure 13: schematically shows an inertia-activated actuator as an example of the release mechanism of the seatbelt redirection unit according to the present disclosure, wherein the inertia-activated actuator is in an engaged state,
- Figure 14: schematically shows the inertia-activated actuator as an example of the release mechanism of the seatbelt redirection unit according to the present disclosure, wherein the inertia-activated actuator is in a disengaged state,
- Figure 15: shows another example of a positioning mechanism of the seatbelt system according to the present disclosure, wherein the drive unit comprises a pinion meshing with a toothed rack,
- Figure 16: shows another example of a positioning mechanism of the seatbelt system according to the present disclosure, wherein the drive unit comprises a belt drive,
- Figure 17: shows a side view of a seatbelt system according to the present disclosure and an associated seat assembly, wherein a deflecting part of the seatbelt redirection unit according to the present disclosure is mounted on the backrest of the seat of the seat assembly, and
- Figure 18: shows steps of the method according to the present disclosure for operating the seatbelt system according to the present disclosure.

### DETAILED DESCRIPTION

The Figures are merely schematic representations and serve only to illustrate examples of the disclosure. Identical or equivalent elements are in principle provided with the same reference signs.

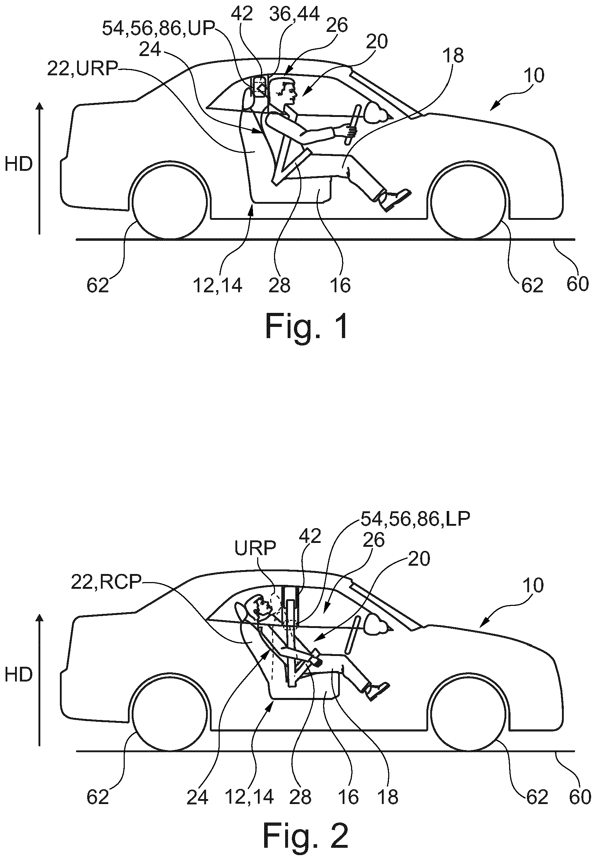

Figure 1 shows a vehicle 10.

The vehicle 10 comprises a seat assembly 12.

The seat assembly 12 comprises a seat 14. The seat 14 comprises a seat cushion 16 configured to support a femur 18 of an occupant 20 of the vehicle 10. The seat 14 also comprises a backrest 22 configured to support a back 24 of the occupant 20 of the vehicle 10.

The vehicle 10 also comprises a seatbelt system 26 associated with the seat assembly 12.

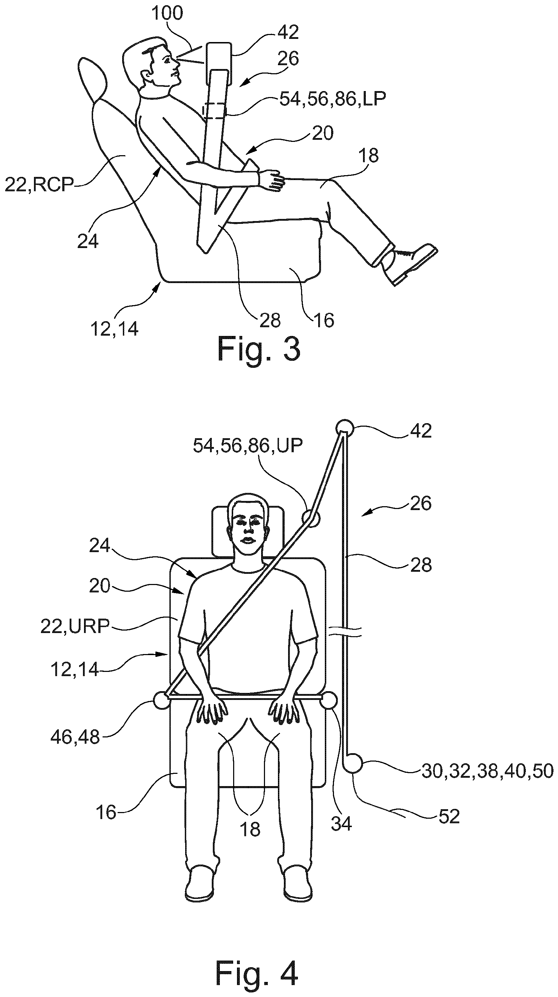

Details of the seatbelt system 26 are shown in Figure 4, which schematically shows the seat assembly 12 and the associated seatbelt system 26 of Figure 1 in a front view.

The seatbelt system 26 comprises a seatbelt 28. The seatbelt 28 is configured to restrain the occupant 20 in the event of a crash or in preparation for an imminent crash of the vehicle 10.

The seatbelt system 26 further comprises a seatbelt anchoring unit 30. The seatbelt anchoring unit 30 comprises a first portion 32 and a second portion 34. The first portion 32 is connected to a first end of the seatbelt 28 and the second portion 34 is connected to a second end of the seatbelt 28.

The first portion 32 and the second portion 34 are attached to a body 36 of the vehicle 10. More precisely, the first portion 32 of the seatbelt anchoring unit 30 is attached to a floor of a passenger cabin of the vehicle 10. The second portion 34 of the seatbelt anchoring unit 30 is attached to the seat 14, which is in turn attached to the body 36 of the vehicle 10. Thus, the seatbelt 28 is anchored to the body 36 of the vehicle 10 at its first end and at its second end.

Integrally formed with the first portion 32 of the seatbelt anchoring unit 30 is a seatbelt retracting unit 38. The seatbelt retracting unit 38 is configured to retract and/or tension the seatbelt 28. It is understood that the seatbelt retracting unit 38 forms part of the seatbelt system 26 of the vehicle 10.

In the present example, the seatbelt retracting unit 38 is formed by a reel 40. A reserve length of the seatbelt 28 is stored in the reel 40. Thus, the reel 40 can provide additional seatbelt 28 length if the occupant 20 of the vehicle 10 pulls onto the seatbelt 28. The reel 40 is further configured to retract the seatbelt 28 if the occupant 20 is not using the seatbelt 28.

Moreover, the seatbelt system 26 comprises a first seatbelt redirection unit 42. The first seatbelt redirection 42 unit is coupled to the seatbelt 28 and attached to the body 36 of the vehicle 10 at a distance from the seatbelt anchoring unit 30. More precisely, the first seatbelt redirection unit 42 is attached to a B-pillar 44 of the body 36 of the vehicle 10 (see Figures 1 and 2). Coming from the reel 40, the seatbelt 28 is redirected at the first seatbelt redirection unit 42 to a direction of a buckle 46 affixed to the seat 14, or the body 36 of the vehicle 10, near a hip of the occupant 20 sitting on the seat 14.

The buckle 46 engages with a tongue 48, also referred to as metal tab, connected to the seatbelt 28 and movable with respect to a length direction of the seatbelt 28 if the occupant 20 is using the seatbelt 28. The buckle 46 is generally provided with a slot where the tongue 48 fits in. Inside the buckle 46, there is generally a spring-loaded mechanism that locks the tongue 48 in place when inserted. To this end, the occupant 20 plugs the tongue 48 into the buckle 46 of the seat 14 such that the seatbelt 28 spans over an upper body and over a pelvic region of the occupant 20.

Due to the explained guiding of the seatbelt 28, the seatbelt 28 is configured to hold and/or restrain the occupant 20 in the event of a crash or in preparation for an imminent crash of the vehicle 10. To this end, the reel 40 is configured to hold, i.e. brake, the seatbelt 28 in the event of a crash or in preparation for an imminent crash in order that a restraining force can be exercised onto the occupant 20 occupying the seat 14 of the seat assembly 12 associated with the seatbelt system 26.

Furthermore, the reel 40 comprises a seatbelt tensioner 50 configured to apply a tensile force onto the seatbelt 28 in the event of a crash or in preparation for an imminent crash.

For this purpose, the seatbelt tensioner 50 comprises a communication interface 52 in order to be able to receive a signal indicative of a crash or of an imminent crash of the vehicle 10.

The signal indicative of a crash or of an imminent crash may be provided by a crash sensor of the vehicle 10.

The crash sensor may comprise an acceleration sensor and/or a contact sensor and/or a sensor indicating a deformation of at least parts of the body 36 of the vehicle 10.

In an alternative, the signal indicative of a crash or of an imminent crash may be provided by a data processing apparatus that executes a computer program for analyzing traffic situations. Data indicative of a traffic situation of the vehicle 10 may be provided to the data processing apparatus by an optical camera, a radar sensor, an ultrasonic sensor and/or a lidar sensor of the vehicle 10.

The seatbelt system 26 also comprises a second seatbelt redirection unit 54. The second seatbelt redirection unit 54 comprises a deflecting part 56.

The second seatbelt redirection unit 54 is located between the first seatbelt redirection unit 42 and the tongue 48 of the seatbelt 28. In other words, the seatbelt 28 passes through the deflecting part 56 of the second seatbelt redirection unit 54 after it has passed through the first seatbelt redirection unit 42 and before it passes through the tongue 48.

A position of the deflecting part 56 with respect to a height direction HD of the vehicle 10 can be adjusted by means of a positioning mechanism 58. The positioning mechanism 58 forms part of the seatbelt system 26. The height direction HD of the vehicle 10 is to be understood as an up or down direction of the vehicle 10 when the vehicle 10 is oriented in a standard driving orientation i.e., when the vehicle 10 contacts a surface 60 of a drivable road with all of its road wheels 62.

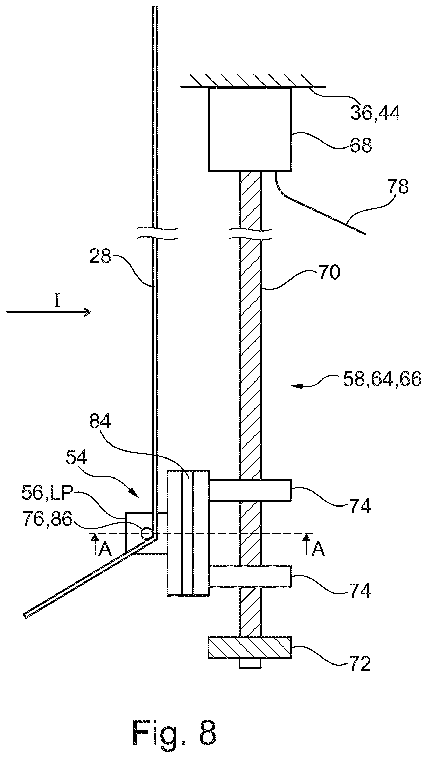

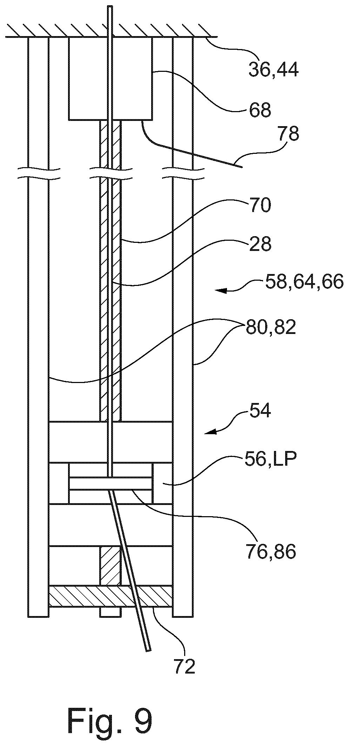

In Figures 8 and 9, the positioning mechanism 58 is shown comprising a drive unit 64 comprising a spindle drive 66.

In the present example, the spindle drive 66 comprises an electric motor 68 that turns a threaded spindle 70.

The electric motor 68 and a bearing element 72 of the threaded spindle 70 are fixedly attached to the B-pillar 44 of the vehicle 10. The B-pillar 44 forms part of the body 36 of the vehicle 10.

The threaded spindle 70 engages with two nuts 74 of the second seatbelt redirection unit 54.

Since the deflecting part 56 including a coupling pin 76 forms part of the second seatbelt direction unit 54, the deflecting part 56 may be moved between an upper position UP, which may also be called first position, and a lower position LP, which may also be called second position, by activating the electric motor 68.

It is understood that also any position in between the upper position UP and the lower position LP may be taken.

The electric motor 68 is activated via a communication interface 78 that is connected to the seat assembly 12.

If the backrest 22 of the seat 14 of the seat assembly 12 is in an upright position URP or is moved to the upright position URP, the deflecting part 56 is moved to the upper position UP.

If the backrest 22 of the seat 14 of the seat assembly 12 is in a reclined position RCP or is moved to the reclined position RCP, the deflecting part 56 is moved to the lower position LP.

If the backrest 22 of the seat 14 is in an intermediate position, i.e. in a position between the upright position URP and the reclined position RCP, the deflecting part 56 is moved into an intermediate position, i.e. a position in between the upper position UP and the lower position LP

Figure 9 shows the positioning mechanism 58 of Figure 8 from a viewing direction that is perpendicular to the viewing direction of Figure 8.

It can be observed that the deflecting part 56 is guided between the lower position LP and the upper position UP by a guiding means 80. It is noted that the guiding means 80 are not illustrated in Figures 8, 13 and 14 for reasons of better visibility of the other components.

In the present example, two linear guiding rails 82 embody the guiding means 80.

Each of the linear guiding rails 82 comprises a groove oriented in a length direction of each guiding rail 82.

The second seatbelt redirection unit 54 comprises two tongues 84 whereof each tongue 84 engages with one of the two linear guiding rails 82 via the groove therein.

Thus, by turning the threaded spindle 70, the second seatbelt redirection unit 54 is guided along a length direction of the linear guiding rails 82. In other words, a height of the deflecting part 56 of the second seatbelt redirection unit 54 along the height direction HD of the vehicle 10 is adjusted by turning the threaded spindle 70.

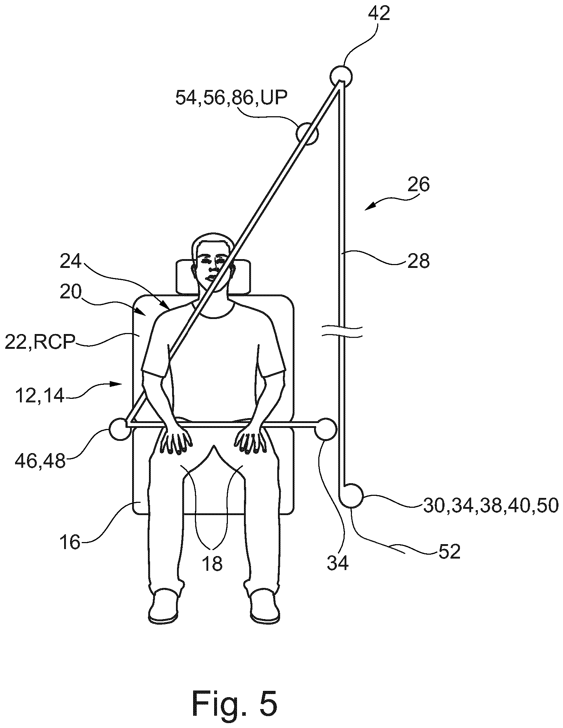

In Figures 1, 4 and 5, the deflecting part 56 is shown in the upper position UP. At the same time, the backrest 22 of the seat 12 which is occupied by the occupant 20 is in the upright position URP.

In these particular examples, i.e. when the deflecting part 56 is in the upper position UP, the deflecting part 56 only slightly deflects that part of the seatbelt 14 that spans between the first seatbelt redirection unit 42 and the tongue 48 /buckle 46. Alternatively, it is possible that the deflecting part 56 does not at all deflect the seatbelt 28 when in the upper position UP.

In Figures 2, 3, 6 and 7, the deflecting part 56 is shown in the lower position LP. At the same time, the backrest 22 of the seat 14 which is occupied by the occupant 20 is in the reclined position RCP.

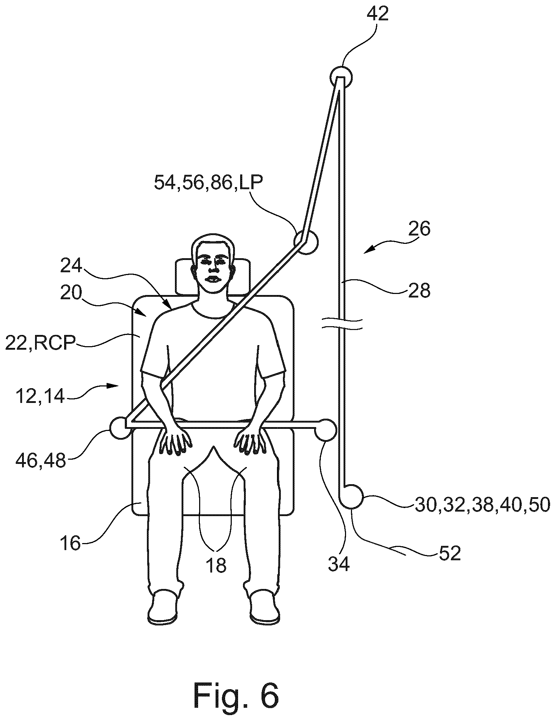

If the deflecting part 56 is coupled to the seatbelt 28 and if the deflecting part 56 is in the lower position LP, the deflecting part 56 significantly deflects that part of the seatbelt 28 that spans between the first seatbelt redirection unit 42 and the tongue 48 /buckle 46. This is shown in Figures 2 and 6.

The second seatbelt redirection unit 54 also comprises a release mechanism 86. The release mechanism 86 selectively uncouples the seatbelt 28 from the deflecting part 56. In other words, once the release mechanism 86 has purposefully uncoupled the seatbelt 28 from the deflecting part 56, the deflecting part 56 cannot deflect the seatbelt 28 anymore.

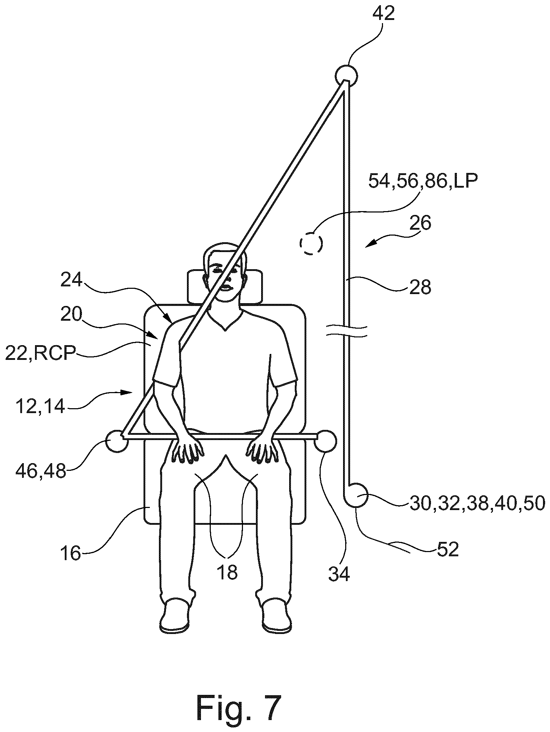

In Figures 3 and 7, the deflecting part 56 is in its lower position LP. However, as the release mechanism 86 has uncoupled the seatbelt 28 from the deflecting part 56, the seatbelt 28 does not pass through the deflecting part 56 anymore or the deflecting part 56 is not able to deflect the seatbelt 28 anymore. In other words, the seatbelt 28 is not deflected by the deflecting part 56 in these examples.

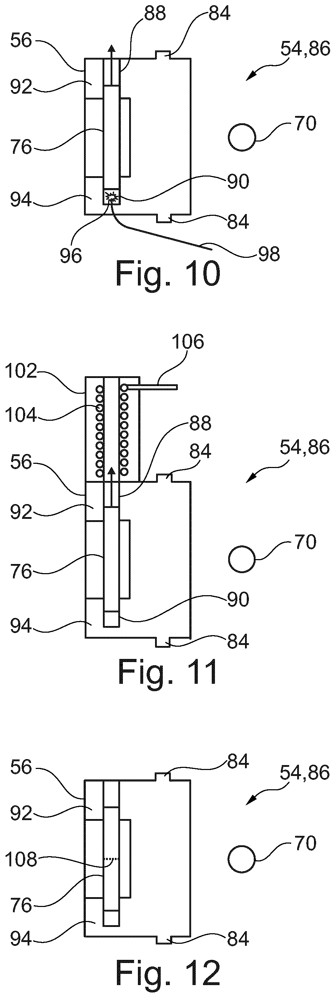

Figure 10 shows the second seatbelt redirection unit 54 in more detail.

The deflecting part 56 comprises the coupling pin 76, which couples the deflecting part 56 to the seatbelt 28. In other words, the seatbelt 28 is deflected by the coupling pin 76 of the deflecting part 56.

The release mechanism 86 may selectively uncouple the seatbelt 28 from the deflecting part 56 in the event of a crash of preparation for an imminent crash. In other words, the release mechanism 86 may dissolve the deflecting interaction between the coupling pin 76 of the deflecting part 56 and the seatbelt 28.

Details of the release mechanism 86 are also shown in Figure 10. The coupling pin 76 is fitted into holes 88, 90 that are formed in two legs 92, 94 of the second seatbelt redirection unit 54. The two legs 92, 94 are arranged in parallel on the same side of the second seatbelt redirection unit 54. The hole 88 in the first leg 92 is a through hole 88 and the hole 90 in the second leg 94 is a blind hole 90.

In the example of Figure 10, a pyrotechnic actuator 96 arranged at an end of the blind hole 90 ejects the coupling pin 76 from its fit in the two holes 88, 90 upon ignition of an explosive material of the pyrotechnic actuator 96.

The pyrotechnic actuator 96 comprises a communication interface 98 for receiving a signal of a crash or of an imminent crash of the vehicle 10. Upon receipt of said signal, the explosive material of the pyrotechnic actuator 96 is ignited.

Consequently, the coupling pin 76 is pushed out of the two holes 88, 90 of the second seatbelt redirection unit 54 by rapidly expanding gases that are created by the ignited explosive material.

In another example not shown herein, it is also conceivable that the pyrotechnic actuator 96 of the release mechanism 86 additionally or alternatively comprises a reservoir of pressurized gas that may be released upon receipt of the signal indicative of a crash or of an imminent crash of the vehicle 10.

Altogether, the seatbelt 28 is uncoupled from the deflecting part 56 if the pyrotechnic actuator 96 is activated.

As a consequence, if the seatbelt 28 is deflected by the deflecting part 56 in the lower position LP (see Figures 2 and 6) and if the pyrotechnic actuator 96 is activated, the seatbelt 28 snatches back to an upper seatbelt position in which it spans between the first seatbelt redirection unit 42 and the tongue 48 /buckle 46 while the deflecting part 56 is still in its lower position LP (see Figures 3 and 7).

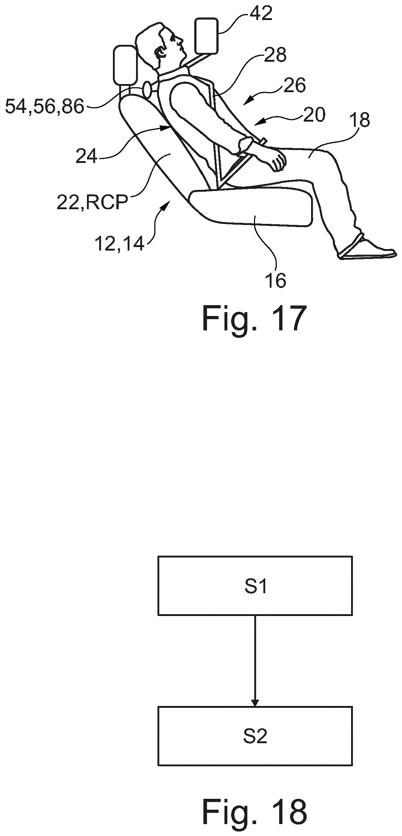

Having explained the above components, the method for operating a seatbelt system 26 of a vehicle 10 is explained in the following with reference to Figure 18.

In a first step S 1, the position of the deflecting part 56 is adjusted based on an orientation of the backrest 22 of the seat 14 of the seat assembly 12 associated with the seatbelt system 26. If the backrest 22 of the seat 14 is in the upright position URP or is being moved to the upright position URP, the deflecting part 56 is moved to the upper position UP by the drive unit 64. If the backrest 22 of the seat 14 is in the reclined position RCP or is being moved to the reclined position RCP, the deflecting part 56 is moved to the lower position LP by the drive unit 64. The latter case is particularly comfortable for the occupant 20 because a view to an outside/environment of the vehicle 10 is not disturbed by a seatbelt 28 spanning freely in the occupant's field 100 of view. Instead, the seatbelt 28 is tightly guided around a torso of the occupant 20.

As has been mentioned before, the backrest 22 may also be in an intermediate position, i.e. in a position between the upright position URP and the reclined position RCP. In such a case, also the deflecting part 56 assumes an intermediate position, i.e. a position between the upper position UP and the lower position LP.

Altogether, the deflecting part 56 assumes a position associated with a position of the backrest 22.

In a second step S2, the release mechanism of the second seatbelt redirection unit 54 is used to uncouple the seatbelt 28 from the deflecting part 56 of the second seatbelt redirection unit 54 in case the vehicle is involved in a crash or is about to be involved in an imminent crash. In this case, the seatbelt 28 indeed spans in the occupant's field 100 of view (between the first seatbelt redirection unit 42 and the tongue 48/buckle 46). However, it has been observed that it can be made use of the full capabilities of the seatbelt 28 in restraining the occupant 20 in the event of a crash if the seatbelt 28 spans freely between the first seatbelt redirection unit 42 and the tongue 48/buckle 46. Thus, the seatbelt system 26 and particularly the second step S2 of the method for operating the seatbelt system 26 solve the conflict of objectives between comfort for the occupant 20 and making full use of the capabilities of the seatbelt 28 in restraining the occupant 20 in the event of a crash of the vehicle 10.

An additional step of the method not explicitly illustrated may comprise returning the backrest 22 of the seat 14 of the seat assembly 12 into the upright position URP in the case of a crash or an upcoming crash of the vehicle 10.

Returning the backrest 22 of the seat 14 into the upright position URP may be accomplished by an electric motor. Additionally or alternatively, returning the backrest 22 of the seat 14 into the upright position URP may be accomplished or at least assisted by forces of inertia of the backrest 22 that are created due to a deceleration of the vehicle 10 as a consequence of the crash or of a braking action of the vehicle 10 in case of an imminent crash.

Figure 11 shows an alternative example of the release mechanism 86 to the one explained above in relation to Figure 10. Thus, only the differences of this variant compared to the release mechanism 86 shown in Figure 10 will be explained in the following.

In Figure 11, the release mechanism 86 comprises a magnetic actuator 102. The magnetic actuator 102 is capable of removing the coupling pin 76 from its fit in the two holes 88, 90 in the two legs of the second seatbelt redirection unit 54.

The magnetic actuator 102 comprises an electric coil 104, which, when energized by electricity through its communication interface 106, develops a magnetic field that pulls out the coupling pin 76 from its fit in the two holes 88, 90 upon ignition.

The electric coil 104 may be energized through its communication interface 106 upon receipt of signal indicative of a crash or of an upcoming crash of the vehicle 10.

Thus, the seatbelt 28 is decoupled from the deflecting part 56.

Figure 12 shows a further alternative example of the release mechanism 86 to the ones explained above in relation to Figures 10 and 11. Thus, only the differences of this variant compared to the pyrotechnic actuator 96 and the magnetic actuator 102 shown in Figures 10 and 11, respectively, will be explained in the following.

In Figure 12, the release mechanism 86 comprises the coupling pin 76 itself. The coupling pin 76 comprises a predefined breaking point 108.

When a yield strength of the predefined breaking point 108 is surpassed by a force that is exercised onto the deflecting part 56, the coupling pin 76 is configured to break at the predefined breaking point 108.

The force exercised onto the deflecting part 56 that breaks the coupling pin 76 may be provided by the seatbelt tensioner 50, which, as has been explained above, forms part of the reel 40.

Upon receipt of a signal of a crash or of an upcoming crash of the vehicle through the communication interface 52, an electric motor and/or a pyrotechnic actuator of the seatbelt tensioner 50 may cause the seatbelt 28 to be tensed.

Consequently, the seatbelt 28 is uncoupled from the deflecting part 56.

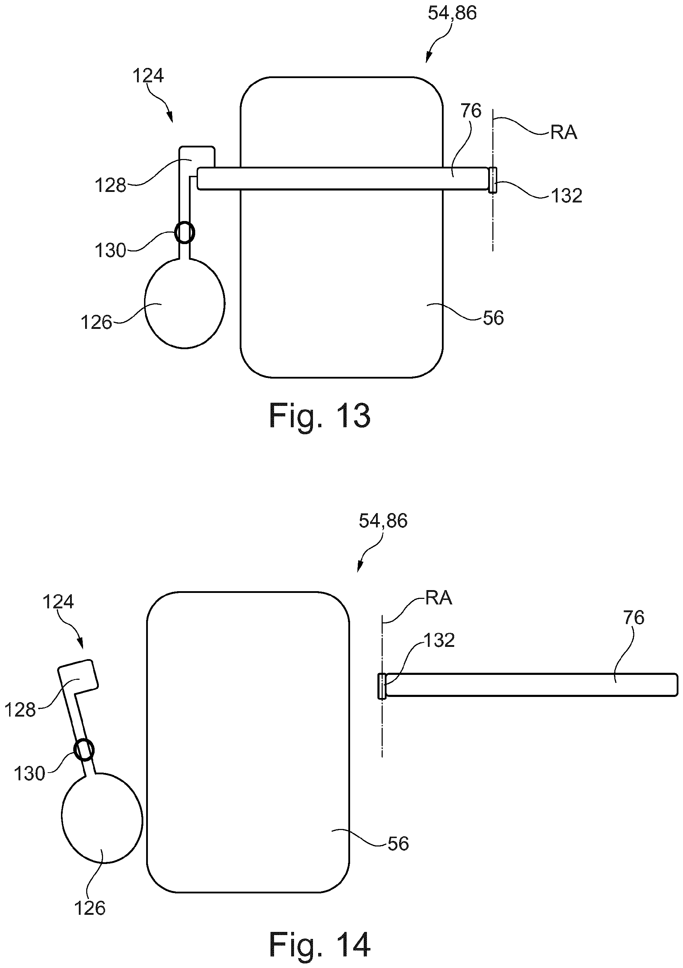

Figures 13 and 14 show a further alternative example of the release mechanism 86 to the ones explained above in relation to Figures 10, 11 and 12. Thus, only the differences of this variant compared to the pyrotechnic actuator 96, the magnetic actuator 102 and the predetermined breaking point 108 shown in Figures 10, 11 and 12, respectively, will be explained in the following.

In Figures 13 and 14, the release mechanism comprises an inertia activated actuator 124.

The inertia-activated actuator 124 comprises an inert mass 126 and a latch 128 which are connected to one another. The inertia-activated actuator 124 is rotatably supported on a bearing 130 arranged between the inert mass 126 and the latch 128. Thus, the inertia-activated actuator 124 may also be referred to as a pendulum. The bearing 130 may be connected to the body 36 of the vehicle 10. For the present example, the bearing 130 is said to be connected to the B-pillar 44 of the vehicle 10.

The coupling pin 76 is suspended on a hinge 132. In the example shown in Figures 13 and 14, a rotational axis of the hinge 132 extends substantially perpendicularly to a rotational axis of the bearing 130. For example, the rotational axis of the hinge 132 extends substantially vertically and the rotational axis of the bearing 130 extends substantially horizontally and in a lateral direction of the vehicle 10.

The hinge 132 is spring-loaded, e.g. by a coil spring or by a spiral spring (not shown). The coupling pin 76 is held in place in the position as shown in Figure 13 against a spring force by the latch 128 of the inertia-activated actuator 124.

If the vehicle 10 rapidly decelerates, e.g. by performing an emergency braking maneuver in an effort to avoid a crash or by crashing into a non-moving object or another traffic participant that moves slower than the vehicle 10, or if the vehicle 10 is rapidly accelerated in a direction opposite of a standard forward driving direction, e.g. by a frontal crash with a fast moving traffic participant, the inert mass 126 may try to keep its state of motion due to its inertia and may move relatively to the B-pillar 44 of the vehicle 10 into the standard forward driving direction of the vehicle 10. If the pendulum is deflected beyond an angular threshold or, in other words, if the inert mass 126 is moved beyond a distance threshold relatively to the B-pillar 44 of the vehicle 10, the latch 128 releases the coupling pin 76.

As a consequence, the spring-loaded coupling pin 76 rotates around a rotational axis RA due to the applied spring force into a position as shown in Figure 14. In other words, the coupling pin 76 is folded away from the deflecting part 56.

In this position, the seatbelt 28 is uncoupled from the deflecting part 56.

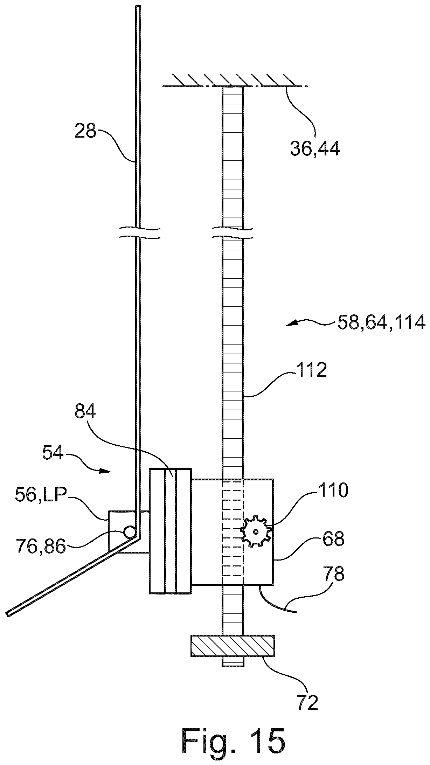

Figure 15 shows an alternative example of the drive unit 64 to the one explained above in relation to Figures 8 and 9. Thus, only the differences of this variant compared to the spindle drive 66 shown in Figures 8 and 9 will be explained in the following.

In Figure 15, an electric motor 68 is attached to the second seatbelt redirection unit 54. The electric motor 68 drives a pinion 110 that meshes with a toothed rack 112. Thus, the alternative example of Figure 15 comprises a gear drive 114 as drive unit 64.

The toothed rack 112 is fixedly attached to the B-pillar 44 of the vehicle 10.

Thus, the deflecting part 56 of the second seatbelt redirection unit 54 can be moved from the upper position UP to the lower position LP and vice versa by activating the electric motor 68.

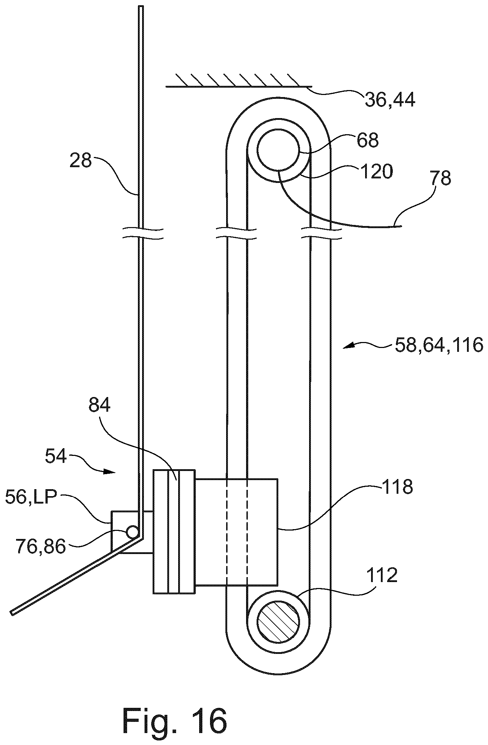

Figure 16 shows a further alternative example of the drive unit 64 to the ones explained above in relation to Figures 8 and 9 as well as 13. Thus, only the differences of this variant compared to the spindle drive 66 and the gear drive 114 shown in Figures 8, 9 as well as 15, respectively, will be explained in the following.

In Figure 16, the second seatbelt redirection unit 54 is fixedly attached to a belt drive 116 via a clamping part 118.

The belt drive 116 comprises a belt 119 that is guided around an upper guide roller 120 and a lower guide roller 122. Each of the two guide rollers 120, 122 is rotatably attached to the B-pillar 44 of the vehicle 10.

The upper guide roller 120 of the two guide rollers 120, 122 is drivingly connected to the electric motor 68. The electric motor is also attached to the B-pillar 44 of the vehicle 10.

Since the clamping part 118 clamps the belt 119, the deflecting part 56 of the second seatbelt redirection unit 54 can be moved from the upper position UP to the lower position LP and vice versa by activating the electric motor 68.

Figure 17 shows an alternative mounting of the second seatbelt redirection unit 54. Whereas the examples of the drive unit 64 explained above referring to the second seatbelt redirection unit 54 comprising a movable connection interface to the body 36 of the vehicle 10, the alternative of the second seatbelt redirection unit 54 shown in Figure 17 comprises a connection interface for connecting the deflecting part 56 to a backrest 22 of the seat 14 of the seat assembly 12 associated with the seatbelt system 26 of the vehicle 10. Only the differences compared to variants of the second seatbelt redirection unit 54 comprising a movable connection interface to the body 36 of the vehicle 10 will be explained in the following.

The deflecting part 56 in the example of Figure 17 is directly and fixedly attached to the backrest 22 of the seat 14. More specifically, the deflecting part 56 is mounted to a shoulder region of the seat 14.

This has the effect that the deflecting part 56 of the second seatbelt redirection unit 54 follows the movement of the backrest 22 of the seat 14 without requiring a dedicated drive unit 64.

The seatbelt 28 is tightly guided adjacent to the torso of the occupant 20 regardless of the backrest 22 being in the upright position URP or in the reclined position RCP.

In case the vehicle 10 is involved in a crash or is about to be involved in an imminent crash and the backrest 22 is in the reclined position, the seatbelt is uncoupled from the deflecting part 56 as explained above, particularly by using a predefined breaking point 108.

This has the effect that that the conflict of objectives between comfort for the occupant 20 and making full use of the capabilities of the seatbelt 28 in restraining the occupant 20 in the event of a crash of the vehicle 10 is resolved.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: seat assembly
- 14: seat
- 16: seat cushion
- 18: femur
- 20: occupant
- 22: backrest
- 24: back of occupant
- 26: seatbelt system
- 28: seatbelt
- 30: seatbelt anchoring unit
- 32: first portion of seatbelt anchoring unit
- 34: second portion of seatbelt anchoring unit
- 36: body of vehicle
- 38: seatbelt retracting unit
- 40: reel
- 42: first seatbelt redirection unit
- 44: B-pillar
- 46: buckle
- 48: tongue of seatbelt
- 50: seatbelt tensioner
- 52: communication interface of seatbelt tensioner
- 54: second seatbelt redirection unit
- 56: deflecting part
- 58: positioning mechanism
- 60: surface of drivable road
- 62: road wheel
- 64: drive unit
- 66: spindle drive
- 68: electric motor
- 70: threaded spindle
- 72: bearing element
- 74: nut
- 76: coupling pin
- 78: communication interface of electric motor
- 80: guiding means
- 82: linear guiding rail
- 84: tongue of second seatbelt redirection unit
- 86: release mechanism
- 88: through hole
- 90: blind hole
- 92: first leg of second seatbelt redirection unit
- 94: second leg of second seatbelt redirection unit
- 96: pyrotechnic actuator
- 98: communication interface of pyrotechnic actuator
- 100: occupant's field of view
- 102: magnetic actuator
- 104: electric coil
- 106: communication interface of magnetic actuator
- 108: predefined breaking point
- 110: pinion
- 112: toothed rack
- 114: gear drive
- 116: belt drive
- 118: clamping part
- 119: belt
- 120: upper guide roller
- 122: lower guide roller
- 124: inertia-activated actuator
- 126: inert mass
- 128: latch
- 130: bearing
- 132: hinge
- HD: height direction
- LP: lower position
- RA: rotational axis
- RCP: reclined position of backrest
- UP: upper position
- URP: upright position of backrest

## Claims

1. A seatbelt system (26) for a vehicle (10), the seatbelt system (26) comprising:
- a seatbelt (28),
- a seatbelt anchoring unit (30) connected to the seatbelt (28) and attachable to a body (36) of the vehicle (10),
- a first seatbelt redirection unit (42) coupled to the seatbelt (28) and attachable to the body (36) of the vehicle (10) at a distance from the anchoring unit (30),
- a seatbelt retracting unit (38) configured to retract and/or tension the seatbelt (28), and
- a second seatbelt redirection unit (54) comprising a deflecting part (56) and a release mechanism (86),
wherein the deflecting part (56) is coupled to the seatbelt (28), and configured for deflecting a portion of the seatbelt (28) spanning between an occupant (20) of the vehicle (10) using the seatbelt (28) and the first seatbelt redirection unit (42), and
wherein the release mechanism (86) is configured for selectively uncoupling the seatbelt (28) from the deflecting part (56) in the event of a crash or in preparation for an imminent crash.

2. The seatbelt system (26) according to claim 1, wherein the deflecting part (56) comprises a connection interface for connecting the deflecting part (56) to a backrest (22) of a seat (14) of the vehicle (10) or wherein the deflecting part (56) comprises a connection interface for connecting the deflecting part (56) to the body (36) of the vehicle (10).

3. The seatbelt system (26) according to claim 1 or 2, wherein the release mechanism (86) comprises a magnetic actuator (102), a pyrotechnic actuator (96), an inertia-activated actuator (124) and/or a predefined breaking point (108) configured to break in the event of a crash or in preparation for an imminent crash.

4. The seatbelt system (26) according to any one of the preceding claims, further comprising a seatbelt tensioner (50), wherein the seatbelt tensioner (50) forms part of the release mechanism (86).

5. The seatbelt system (26) according to any one of the preceding claims, further comprising a positioning mechanism (58) coupled to the deflecting part (56) such that a position of the deflecting part (56) can be adjusted along a height direction (HD) of the vehicle (10).

6. The seatbelt system (26) according to claim 5, wherein the positioning mechanism (58) comprises a drive unit (64) for moving the deflecting part (56).

7. The seatbelt system (26) according to claim 6, wherein the drive unit (64) comprises a gear drive (116), a spindle drive (66) and/or a belt drive (116).

8. The seatbelt system (26) according to claim 6 or 7, wherein the drive unit (64) comprises a communication interface (78) connectable to a control unit of the seat (14) of the vehicle (10) such that the deflecting part (56) is positionable based on a position and/or a movement of the seat (14).

9. A seatbelt redirection unit (54) for a seatbelt system (26) of a vehicle (10), the seatbelt redirection unit (54) comprising:
a deflecting part (56) couplable to a seatbelt (28) and configured for deflecting a portion of the seatbelt (28) spanning between an occupant (20) of the vehicle (10) using the seatbelt (28) and another seatbelt redirection unit (42), and
a release mechanism (86) for selectively uncoupling the seatbelt (28) from the deflecting part (56) in the event of a crash or in preparation for an imminent crash.

10. The seatbelt redirection unit (54) according to claim 9, wherein the release mechanism (86) comprises a magnetic actuator (102), a pyrotechnic actuator (96), an inertia-activated actuator (124) and/or a predefined breaking point (108) configured to break in the event of a crash or in preparation for an imminent crash.

11. The seatbelt redirection unit (54) according to claim 9 or 10, wherein the release mechanism (86) comprises a seatbelt tensioner (50).

12. A vehicle (10) comprising a seatbelt system (26) according to any one of claims 1 to 8 or a seatbelt redirection unit (54) according to any one of claims 9 to 11, wherein the seatbelt system (26) or the seatbelt redirection unit (54) is associated with a seat (14) of the vehicle (10).

13. The vehicle (10) of claim 12, wherein the deflecting part (56) is mounted on a backrest (22) of the seat (14) or on a body (36) of the vehicle (10).

14. A method for operating a seatbelt system (26) of any one of claims 1 to 8, wherein the seatbelt (28) is redirected at a first position using a first seatbelt redirection unit (42), and at a second position using a second seatbelt redirection unit (54), the second seatbelt redirection unit (54) comprising a deflecting part (56) and a release mechanism (86), the method comprising, in the event of a crash or an imminent crash, using the release mechanism (86) for uncoupling the seatbelt (28) from the deflecting part (56) of the second seatbelt redirection unit (54).

15. The method of claim 14, wherein redirecting the seatbelt (28) at a second position using a second seatbelt redirection unit (54) is based on a position and/or a movement of the seat (14).

## Amended claims

### Amended claims in accordance with Rule 137(2) EPC.

1. A seatbelt system (26) for a vehicle (10), the seatbelt system (26) comprising:
- a seatbelt (28),
- a seatbelt anchoring unit (30) connected to the seatbelt (28) and attachable to a body (36) of the vehicle (10),
- a first seatbelt redirection unit (42) coupled to the seatbelt (28) and attachable to the body (36) of the vehicle (10) at a distance from the anchoring unit (30),
- a seatbelt retracting unit (38) configured to retract and/or tension the seatbelt (28),
- a second seatbelt redirection unit (54) comprising a deflecting part (56) and a release mechanism (86),
wherein the deflecting part (56) is coupled to the seatbelt (28), and configured for deflecting a portion of the seatbelt (28) spanning between an occupant (20) of the vehicle (10) using the seatbelt (28) and the first seatbelt redirection unit (42), and wherein the release mechanism (86) is configured for selectively uncoupling the seatbelt (28) from the deflecting part (56) in the event of a crash or in preparation for an imminent crash, and
- a positioning mechanism (58) coupled to the deflecting part (56) such that a position of the deflecting part (56) can be adjusted along a height direction (HD) of the vehicle (10).

2. The seatbelt system (26) according to claim 1, wherein the deflecting part (56) comprises a connection interface for connecting the deflecting part (56) to a backrest (22) of a seat (14) of the vehicle (10) or wherein the deflecting part (56) comprises a connection interface for connecting the deflecting part (56) to the body (36) of the vehicle (10).

3. The seatbelt system (26) according to claim 1 or 2, wherein the release mechanism (86) comprises a magnetic actuator (102), a pyrotechnic actuator (96), an inertia-activated actuator (124) and/or a predefined breaking point (108) configured to break in the event of a crash or in preparation for an imminent crash.

4. The seatbelt system (26) according to any one of the preceding claims, further comprising a seatbelt tensioner (50), wherein the seatbelt tensioner (50) forms part of the release mechanism (86).

5. The seatbelt system (26) according to any of the preceding claims, wherein the positioning mechanism (58) comprises a drive unit (64) for moving the deflecting part (56).

6. The seatbelt system (26) according to claim 5, wherein the drive unit (64) comprises a gear drive (116), a spindle drive (66) and/or a belt drive (116).

7. The seatbelt system (26) according to claim 5 or 6, wherein the drive unit (64) comprises a communication interface (78) connectable to a control unit of the seat (14) of the vehicle (10) such that the deflecting part (56) is positionable based on a position and/or a movement of the seat (14).

8. A vehicle (10) comprising a seatbelt system (26) according to any one of the preceding claims, wherein the seatbelt system (26) is associated with a seat (14) of the vehicle (10).

9. The vehicle (10) of claim 8, wherein the deflecting part (56) is mounted on a backrest (22) of the seat (14) or on a body (36) of the vehicle (10).

10. A method for operating a seatbelt system (26) of any one of claims 1 to 7, wherein the seatbelt (28) is redirected at a first position using a first seatbelt redirection unit (42), and at a second position using a second seatbelt redirection unit (54), the second seatbelt redirection unit (54) comprising a deflecting part (56) and a release mechanism (86), the method comprising, in the event of a crash or an imminent crash, using the release mechanism (86) for uncoupling the seatbelt (28) from the deflecting part (56) of the second seatbelt redirection unit (54), the method further comprising adjusting a position of the deflecting part (56) along a height direction (HD) of the vehicle (10) by means of a positioning mechanism (58) coupled to the deflecting part (56).

11. The method of claim 10, wherein redirecting the seatbelt (28) at a second position using a second seatbelt redirection unit (54) is based on a position and/or a movement of the seat (14).
